# EUROPEAN PATENT SPECIFICATION

(11) **EP 3 868 206 B1**
(45) Date of publication and mention of the grant of the patent: **20.05.2026**
(21) Application number: 20158037.0
(22) Date of filing: 18.02.2020
(51) Int. Cl.: A01N 27/00, A01N 31/08, A01N 65/08, A01N 65/10, A01N 65/22, A01P 13/02

(54) **A METHOD FOR THE HERBICIDAL TREATMENT OF DICOTYLEDONOUS WEEDS**
VERFAHREN ZUR HERBIZIDEN BEHANDLUNG VON DIKOTYLEN UNKRÄUTERN
PROCÉDÉ DE TRAITEMENT HERBICIDE D'ADVENTICES DICOTYLÉDONES

(43) Date of publication of application: 25.08.2021
(73) Proprietor: Rendapart, 9300 Aalst (BE)
(72) Inventor: KRAUCH, Frans, 1790 Hekelgem-Affligem (BE); KRAUCH, Pieter, 9300 Aalst (BE); VANTHOMME, Peter, 9300 Aalst (BE)
(74) Representative: Gevers Patents

(56) References cited:
- US-A1- 2018 014 534
- HAZRATI HOSSEIN ET AL: "Natural herbicide activity ofSatureja hortensisL. essential oil nanoemulsion on the seed germination and morphophysiological features of two important weed species", ECOTOXICOLOGY AND ENVIRONMENTAL SAFETY, ACADEMIC PRESS, SAN DIEGO, CA, US, vol. 142, 28 April 2017 (2017-04-28), pages 423 - 430, XP085027363, ISSN: 0147-6513, DOI: 10.1016/J.ECOENV.2017.04.041
- KORDALI S ET AL: "Antifungal, phytotoxic and insecticidal properties of essential oil isolated from Turkish Origanum acutidens and its three components, carvacrol, thymol and p-cymene", BIORESOURCE TECHNOLOGY, ELSEVIER, AMSTERDAM, NL, vol. 99, no. 18, 1 December 2008 (2008-12-01), pages 8788 - 8795, XP024524995, ISSN: 0960-8524, [retrieved on 20080529], DOI: 10.1016/J.BIORTECH.2008.04.048
- SARA BENCHAA ET AL: "Chemical composition and herbicidal activity of essential oils from two Labiatae species from Algeria", THE JOURNAL OF ESSENTIAL OIL RESEARCH : JEOR, vol. 31, no. 4, 12 February 2019 (2019-02-12), UK, pages 335 - 346, XP55706800, ISSN: 1041-2905, DOI: 10.1080/10412905.2019.1567400

## Description

### FIELD OF INVENTION

The present invention relates to an environmentally friendly method for the herbicidal treatment of dicotyledonous weeds which are mixed in with or surrounded by monocotyledons, in particular grass.

### BACKGROUND OF THE INVENTION

Weeds are broadly classified into two categories, monocotyledonous (grasses) and dicotyledonous (broadleaf) weeds. Monocotyledons and dicotyledons, also known as monocots and dicots, respectively, are two types of angiosperm plants. The cotyledon part of angiosperms is an embryonic leaf that is the first leaf (or leaves) to appear when a seed is germinating. Two characteristics distinguish monocotyledons from dicotyledons. One is the number of leaves the young seedling has when it emerges through the soil surface. Monocotyledonous plants have one seedling leaf or cotyledon during germination which supply the young plant with food and nutrients. Dicotyledonous plants have two seedling leaves or cotyledons. The second characteristic is the venation within the true leaves. In the monocotyledons the veins run parallel to each other, while in the dicotyledons the veins branch in several directions in a netted fashion. In weed control dicotyledons are referred to as broadleaf weeds and the monocotyledons as narrowleaf weeds, but it is their venation and number of seedling leaves or cotyledons that determine their category.

Dicotyledonous and monocotyledonous weed infestations can be controlled with moderate to harsh synthetic chemicals such as non-selective chloroacetanilide herbicides (e.g. alachlor, butachlor, pretilachlor etc.). However, for areas which contain desirable monocotyledons (e.g. grasses) said harsh synthetic chemicals are not an option because these desirable monocotyledons will be affected as well.

Phenoxy herbicides are the most widely used family of herbicides worldwide. 2,4-Dichlorophenoxyacetic acid (2,4-D) is an extensively used synthetic herbicide which, at low doses, selectively kills most broadleaf weeds (i.e. dicotyledons) but leaves grasses relatively unaffected (i.e. monocotyledons) (Planta Daninha (2014), 32, 649-654). 2,4-D is extensively used as a weed killer on cereal crops and pastures. 2,4-D is highly water-soluble, and even after a long period of disuse, considerable amounts of both 2,4-D and/or its main product of degradation, namely 2,4-dichlorophenol (2,4-DCP), might be found in nature (Applied Microbiology and Biotechnology (2019), 103, 5065-5078). Islam et al. (Environment International (2018), 111, 332-351) reviewed the potential impact of 2,4-D on human and ecosystems. The review describes the findings that 2,4-D is present in soil, air and surface water of regions where its usage is high. Most of 2,4-D addition to the environment results through effluents and spills resulting from its manufacturing and transportation or directly through its application as an herbicide agent.

The widespread use of synthetic herbicides in weed control could result in negative impact on human health and on the environment, both as a consequence of a very large number of synthetic chemicals being released, largely unchecked, into the environment. Environmental pollution, of for instance soil and water, resulting from extensive use of such synthetic herbicides has been recognized as a serious environmental problem. The chemicals can often have unexpected and serious detrimental effects on desirable insects or animals. Furthermore, the public has become concerned about the amounts of residual chemicals that persist in food, ground water and the environment. Consequently, the legislation on the use of synthetic herbicides enforced by the environmental regulatory agencies tends to become more stringent in many countries.

De Mastro and co-authors (Conference Paper in Acta Horticulturae (2006), 723, 335) discloses that the environmental and health concern of the many synthetic herbicides, in combination with high discovery and registration costs and the development of target resistance, is leading to alternative strategies involving the use of biobased herbicides. Natural compounds can be successfully used as bioherbicides because they are potentially more environmental friendly and safe.

US 20080125321 A1 describes a method and formulations to eliminate moss (*Bryophytes*) with oregano oil extract, thus a natural derived product. The oregano oil extract is applied to moss or to a locus where moss exists, preferably by spraying an aqueous solution which comprises no more than 2% oregano oil and one or more hydrocolloids in an amount of about 0.25% to about 25%. Said hydrocolloids include agar, alginates, acacia, arabinogalactan, caragum, carrageenan, chicory, guar, pectin, inulin or xanthum. In the working embodiments, the formulations were only applied as spot treatments on putting greens.

EP 3192370 A1 discloses an environmentally friendly herbicidal formulation wherein the formulation is simultaneously more effective in eliminating moss (*Bryophytes*) and fertilization of plants mixed in with or surrounding the moss, in particular in stimulating the (re)growth of grass (monocotyledon). The formulation comprises a composition which is preferably derived from natural sources and at least one organo or organo-mineral fertilizer. In the working examples, the inventors have surprisingly found that the fertilizer synergistically enhances the effect of aforementioned composition on the elimination of moss while causing minimal damage to desirable plants mixed in with or surrounding the moss and in fact simultaneously provide a fertilizer to said desirable plants.

A review of Ciriminna et al. (Biofuels Bioproducts & Biorefining (2019)) describes the use of pelargonic acid, i.e. n-nonanoic acid, as the active ingredient in natural herbicide products. Pelargonic acid has entered the marketplace in many countries, offering a long-awaited safer alternative to synthetic chemical herbicides. This active ingredient of new biobased herbicides can be found in the leaves of *Pelargonium roseum.* The substance is officially recognized in the USA as a GRAS (Generally Regarded As Safe) chemical. The acid is a foliar-applied herbicide, which acts exclusively by contact, thereby attacking and destroying the cell membranes of the plant epidermis and causing rapid tissue dehydration. The herbicidal action is quick, non-selective, and broad spectrum, leading to necrotic lesions on plant aerial parts. It penetrates the waxy layer of the leaves and destroys the cell membranes of the plant's epidermal cells causing rapid and non-selective 'burn-down' of green tissues.

US 9609865 B2 and WO 2019/076878 A1 both disclose a synergistically effective herbicide composition comprising the active ingredient pelargonic acid and flazasulfuron as an acetolactate synthase (ALS) enzyme inhibitor. Flazasulfuron has shown an unexpected increase in herbicidal activity when combined with pelargonic acid. The herbicide composition can be used for the treatment of dicotyledonous and monocotyledonous weeds and moss and algae. Mosses are *Bryophytes. Bryophytes* are non-vascular plants and do not have any tissues that carry water or other substances around the plant. Mosses reproduce by making spores rather than seeds. On the other hand, monocotyledons and dicotyledons are *Angiosperms* (*Magnoliophyta*). *Angiosperms* are vascular plants and they have tissues. Monocotyledons and dicotyledons reproduce by making seeds. Therefore, monocotyledons and dicotyledons are more closely related to each other when compared to mosses on the one hand and monocotyledons or dicotyledons on the other hand. Thus, the drawback of the herbicide compositions of US 9609865 B2 and WO 2019/076878 A1 is that they cannot be used for the selective treatment of dicotyledonous weed infestations when they are mixed in with or surrounded by monocotyledons.

Kordali and co-authors (Bioresource Technology (2008), 99, 8788-8795) disclose the herbicidal effect of carvacrol and thymol as active ingredient in an essential oil derived from the plant *Origanum acutidens* on the dicotyledonous weeds *Amaranthus retroflexus, Chenopodium album,* and *Rumex crispus.* Hazrati et al. (Ecotoxicology and Environmental Safety (2017), 142, 423-430) have later shown that an oil/water emulsion based on an essential oil derived from *Satureja hortensis,* mainly comprising carvacrol and γ-terpinene, has herbicidal activity against the dicotyledonous weeds *Amaranthus retroflexus* and *Chenopodium album.*

Benchaa and co-authors (Journal of Essential Oil Research 2019, 335-346) disclose a method for herbicidal treatment of any of the dicotyledonous weeds *Sinapis arvensis, Sonchus oleraceus,* and *Xanthium strumarium* and independently of the monocotyledonous weeds *Avena fatua* and *Cyperus rotundus* using an emulsion based on an essential oil derived from *Thymus fontanesii,* which comprises mainly carvacrol, thymol, *p*-cymene and γ-terpinene. US 2018/0014534 A1 discloses a herbicide composition comprising as active ingredient thymol or carvacrol which can be used for the treatment of the dicotyledonous weed *Ambrosia* (ragweed) and independently of the monocotyledonous weed *Echinochloa* (barnyard grass).

Instead of using any chemical formulations, manual methods for the removal of dicotyledonous weed infestations in presence of monocotyledons are indeed an option. For example, the selective removal of dicotyledonous weeds in presence of monocotyledons may be achieved through cultivation, hoeing, and/or hand pulling. However, these methods are very time-consuming and also damage the monocotyledons which are mixed in with or surrounding the dicotyledonous weeds and, therefore, selective herbicides may provide a more effective and economical means of selective weed control of dicotyledons in presence of monocotyledons.

Presently, none of the known methods described in the literature are environmentally friendly and economically favourable methods for the selective herbicidal treatment of dicotyledonous weed infestations which are mixed in with or surrounded by monocotyledons, in particular said monocotyledons being grass.

In view of the above, there remains a further need to provide an environmentally friendly and economically favourable method for the selective herbicidal treatment of well evolved as newly initiated dicotyledonous weed infestations which are mixed in with or surrounded by monocotyledons, in particular said monocotyledons being grass.

### SUMMARY OF THE INVENTION

The Applicant has now surprisingly found that it is possible to provide a method using an environmentally friendly and economically favourable herbicide fulfilling the above mentioned needs.

Thus, the primary objective of the present invention is to provide a method for the herbicidal treatment of an area having a dicotyledonous weed infestation wherein the method comprises applying a formulation [formulation (F), herein after] onto said area and wherein said formulation (F) comprises at least one composition [composition (C), herein after] wherein said composition (C) comprises carvacrol (A₁) of formula (Iₐ₁) present in an amount from 82.0 to 98.0 weight percent [wt. %, herein after], relative to the total weight of composition (C), and
wherein said at least one composition (C) is applied in an amount from 100 to 3000 mg per square meter [m², herein after] of said area, wherein the dicotyledonous weed infestation is selectively treated in the presence of monocotyledons, and
wherein said dicotyledonous weed is selected from the group consisting of *Trifolium, Melilotus,* and *Medicago Lupulina,* and wherein said monocotyledons are *Poa.*

It is a further object of the present invention to provide a use of said composition (C), for the herbicidal treatment of an area having a dicotyledonous weed infestation in presence of monocotyledons, wherein said dicotyledonous weed is selected from the group consisting of *Trifolium, Melilotus,* and *Medicago Lupulina,* and wherein said monocotyledons are *Poa.*

### DETAILED DESCRIPTION OF THE INVENTION

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a composition comprising components A and B" should not be limited to composition consisting only of components A and B. It means that with respect to the present invention, the only relevant components of the composition are A and B. Accordingly, the terms "comprising" and "including" encompass the more restrictive terms "consisting essentially of" and "consisting of".

Within the context of the present invention, the expression "at least one composition [composition (C), herein after]" is intended to denote one or more than one composition (C). Mixtures of compositions (C) can also be used for the purpose of the invention. The expression "at least one compound (A) of formula (Iₐ)" is intended to denote one or more than one compound (A) of formula (Iₐ). Mixtures of compounds (A) of formula (Iₐ) can also be used for the purpose of the invention.

In the rest of the text, the expressions "composition (C)" and "compound (A)" are understood, for the purposes of the present invention, both in the plural and the singular, that is to say the formulation (F) of the present invention may comprise one or more than one composition (C) and composition (C) may comprise one or more than one compound (A) of formula (Iₐ).

As used herein the term "alkyl", "alkenyl" and "alkynyl" have the broadest meaning generally understood in the art, and may include a moiety which is linear, branched, cyclic or a combination thereof, alkenyl and alkynyl groups may contain from one to twelve carbon atoms.

The inventors have surprisingly found that by using one or more composition (C), as detailed above, dicotyledonous weed infestations can be selectively treated in presence of monocotyledons, wherein said dicotyledonous weed is selected from the group consisting of *Trifolium, Melilotus,* and *Medicago Lupulina,* and wherein said monocotyledons are *Poa.*

According to a preferred embodiment of the present invention, the composition (C) apart from carvacrol (A₁) of formula (Iₐ₁) further comprises thymol (A₂) of formula (Iₐ₂) and/or p-cymene (A₃) of formula (Iₐ₃): 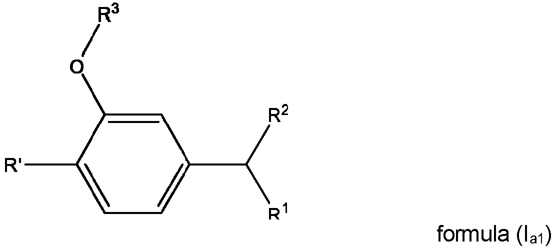 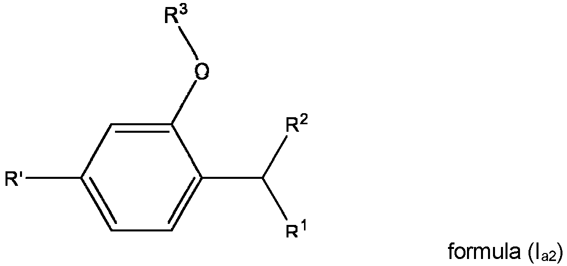 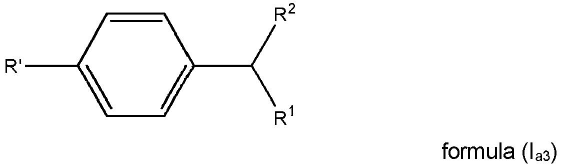 wherein
- R³ is a hydrogen;
- R' is a methyl group;
- R¹ and R², are methyl groups.

At least one of the compounds (A₁), (A₂) and (A₃) as used in the method of the present invention may be derived from natural sources or be chemically synthesized. Said synthesis of the at least one of the compounds (A₁), (A₂) and/or (A₃) may be carried out using conventional methods known to the skilled in the art.

According to certain embodiments of the method according to the present invention, composition (C) may further comprise at least one of other ingredients [ingredient (I_{C}), herein after]. Non-limiting examples of this ingredient (I_{C}) notably include γ-terpinene, β-caryophyllene, α-thujene, α-pinene, camphene, sabinene, β-pinene, β-myrcene, α-terpinene, limonene, cis-ocimene, trans-ocimene, linalool, pinocamphone, borneol, isopinocamphone, terpin-4-ol, α-terpineol, β-bourbonene, germacrene-D, spathulenol and caryophyllene oxide.

Ingredient (I_{C}) as used in the method of the present invention may be derived from natural sources or be chemically synthesized. Said synthesis of Ingredient (I_{c}) may be carried out using conventional methods known to the skilled in the art.

In composition (C) of the present invention at least one of the compounds (A₁), (A₂) and (A₃) and optionally the ingredient (I_{c}) may be derived from natural sources, such as notably plant extracts. Alternatively, at least one of the compounds compound (A₁), compound (A₂), compound (A₃), and optionally the ingredient (I_{c}) may be prepared chemically. The synthesis of at least one of the compounds (A₁), (A₂) and (A₃) and/or, when present, other ingredient (I_{C}) in composition (C) may be carried out using conventional methods known to the skilled in the art.

Non limiting examples of such plant extracts include, but are not limited to, extracts of wild plants, ruderal located plants and man-made cultivars or their improved species. Among plant extracts mention may be notably made of extracts of Allium sp., Aloysia sp., Anethum sp., Anthriscus sp., Armorica sp., Artemisia sp., Borago sp., Capsicum sp., Carum sp., Chamaemelum sp., Chelidonium sp., Coriandrum sp., Cymbopogon sp., Foeniculum sp., Hyssopus sp., Lavandula sp., Laurus sp., Levisticum sp., Lippia sp., Melissa sp., Mentha sp., Monarda sp., Myrrhis sp., Ocimum sp., Origanum sp., Pelargonium sp., Pimpinella sp., Rosmarinus sp., Ruta sp., Salvia sp., Sanguisorba sp., Satureja sp., Thymus sp., Valeriana sp..

If desired, composition (C) may consist essentially of carvacrol (A₁) and optionally thymol (A₂) and/or p-cymene (A₃).

For the purpose of the present invention, the expression "consist essentially of" is intended to denote that any additional ingredient different from compound (A1), (A2) and (A3) is present in an amount of at most 1.0 wt. %, relative to the total weight of composition (C).

Generally, when present, the weight percent of ingredient (I_{c}), as detailed above, relative to the total weight of composition (C), is equal to or less than 15.0 wt. %, even more preferably equal to or less than 10.0 wt. %, most preferably equal to or less than 7.5 wt. %.

It is further understood that, when present, the weight percent of ingredient (I_{c}), relative to the total weight of composition (C), is equal to or greater than 0.1 wt. %, advantageously equal to or greater than 0.5 wt. %, preferably equal to or greater than 1.0 wt. %, more preferably equal to or greater than 1.5 wt. %, most preferably equal to or greater than 2.0 wt. %.

According to certain embodiments of the present invention, the composition (C) comprises at least one compound (A₁) of formula (Iₐ₁), and at least one compound (A₂) of formula (Iₐ₂) and/or at least one compound (A₃) of formula (Iₐ₃).

According to a preferred embodiment of the present invention, the composition (C) comprises at least one compound (A₁) of formula (Iₐ₁), and at least one compound (A₂) of formula (Iₐ₂) and at least one compound (A₃) of formula (Iₐ₃).

Good results were obtained when the weight percent of compound (A₁) of formula (Iₐ₁), relative to the total weight of composition (C) is between 82.0 wt. % - 98.0 wt. %.

Generally, when present, the weight percent of compound (A₂) of formula (Iₐ₂), relative to the total weight of composition (C), is not restricted but advantageously is equal to or greater than 0.01 wt. %, preferably, equal to or greater than 0.05 wt. %, more preferably, equal to or greater than 1.00 wt. %, more preferably, equal to or greater than 5.00 wt. %, more preferably equal to or greater than 10.00 wt. %, even more preferably equal to or greater than 12.50 wt. %; most preferably equal to or greater than 15.00 wt. %.

When composition (C) is derived from natural sources, compound (A₂) of formula (Iₐ₂) is generally present in lower amounts.

Specifically, when present, the weight percent of compound (A₂) of formula (Iₐ₂), as detailed above, relative to the total weight of composition (C), is advantageously equal to or less than 10.0 wt. %, preferably equal to or less than 8.0 wt. %, more preferably equal to or less than 6.0 wt. %, more preferably equal to or less than 5.0 wt. %, more preferably equal to or less than 4.0 wt. %, even more preferably equal to or less than 3.5 wt. %, most preferably equal to or less than 3.0 wt. %.

It is further understood that, when present, the weight percent of compound (A₂) of formula (Iₐ₂), relative to the total weight of composition (C), is advantageously equal to or greater than 0.01 wt. %, preferably, equal to or greater than 0.05 wt. %, more preferably equal to or greater than 0.10 wt. %, more preferably equal to or greater than 0.30 wt. %; even more preferably equal to or greater than 0.70 wt. %; most preferably equal to or greater than 1.00 wt. %.

Generally, when present, the weight percent of compound (A₃) of formula (Iₐ₃), relative to the total weight of composition (C), is not restricted but advantageously equal to or greater than 0.01 wt. %, preferably, equal to or greater than 0.05 wt. %, more preferably, equal to or greater than 1.00 wt. %, preferably, equal to or greater than 5.00 wt. %, more preferably equal to or greater than 10.00 wt. %, even more preferably equal to or greater than 12.50 wt. %, most preferably equal to or greater than 15.00 wt. %.

When composition (C) is derived from natural sources, compound (A₃) of formula (Iₐ₃) is generally present in lower amounts.

Specifically, when present, the weight percent of compound (A₃) of formula (Iₐ₃), as detailed above, relative to the total weight of composition (C), is advantageously equal to or less than 15.00 wt. %, preferably equal to or less than 12.00 wt. %, more preferably equal to or less than 10.00 wt. %, more preferably equal to or less than 7.00 wt. %, more preferably equal to or less than 6.00 wt. %, even more preferably equal to or less than 5.00 wt. %, most preferably equal to or less than 4.00 wt. %.

It is further understood that, when present, the weight percent of compound (A₃) of formula (Iₐ₃), relative to the total weight of composition (C), is advantageously equal to or greater than 0.01 wt. %, preferably, equal to or greater than 0.05 wt. %, more preferably, equal to or greater than 0.10 wt. %, more preferably equal to or greater than 0.50 wt. %, more preferably equal to or greater than 1.00 wt. %, even more preferably equal to or greater than 1.50 wt. %; most preferably equal to or greater than 2.00 wt. %.

According to a preferred embodiment of the present invention, the composition (C), comprised in the formulation (F) of the present invention, comprises:
- 82.0 wt. % - 98.0 wt. % of at least one compound (A₁) of general formula (Iₐ₁), as defined above;
- at least 0.01 wt. % of at least one compound (A₂) of general formula (Iₐ₂), as defined above;
- at least 0.01 wt. % of at least one compound (A₃) of general formula (Iₐ₃), as defined above; and
- at least 0.10 wt. % of at least one ingredient (I_{c}),
wherein all wt. % are relative to the total weight of the composition (C).

As said above, the amount of the at least one composition (C) comprised in the formulation (F) which is applied to an area having a dicotyledonous weed infestation is from 100 to 3000 mg per square meter [m², herein after] of said area.

In a preferred embodiment of the method according to the present invention, the amount of the at least one composition (C) comprised in the formulation (F) which is applied to an area having a dicotyledonous weed infestation is from 150 to 2700 mg per m² of said area, preferably from 300 to 2500 mg per m² of said area, more preferably from 450 to 2350 mg per m² of said area, and most preferably from 600 to 2250 mg per m² of said area.

In general, the formulation (F) as used in the method of the present invention is a liquid formulation [liquid formulation (F_{L}), herein after] comprising the at least one composition (C), as defined above.

For the purpose of the present invention, the term "liquid formulation (F_{L})" is intended to refer to a formulation in the form of a dispersion such as notably an emulsion and a suspension, a foam, preferably in the form of a dispersion, more preferably the dispersion is an emulsion.

Preferably, the liquid formulation (F_{L}) is a water-based formulation comprising water and the at least one composition (C), as defined above.

According to certain embodiments of the method according to the present invention, the liquid formulation (F_{L}) consists essentially of water and the at least one composition (C), as detailed above.

For the purpose of the present invention, the expression "consist essentially of' is intended to denote that any additional ingredient different from water and different from the at least one composition (C), as detailed above, is present in an amount of at most 1.0 wt. %, advantageously at most 0.9 wt. %, preferably at most 0.8 wt. %, relative to the total weight of formulation (F).

In a particular embodiment of the method according to the present invention, the weight percent of the at least one composition (C), as detailed above, relative to the total weight of the liquid formulation (F_{L}), is advantageously equal to or at least 0.1 wt. %, preferably equal to or at least 0.2 wt. %, more preferably equal to or at least 0.3 wt. %, even more preferably equal to or at least 0.4 wt. %, and most preferably equal to or at least 0.5 wt. %. It is further understood that the upper limit of the weight percent of the at least one composition (C), relative to the total weight of the liquid formulation (F_{L}), is advantageously equal to or less than 3.2 wt.%, preferably equal to or less than 3.0 wt. %, more preferably equal to or less than 2.7 wt. %, even more preferably equal to or less than 2.5 wt. %, and most preferably equal to or less than 2.3 wt. %.

It is further understood that all definitions and preferences as described above equally apply for this embodiment and all further embodiments, as described below.

According to certain embodiments of the method according to the present invention, the formulation (F) may further comprise at least one fertilizer (Z) wherein the at least one fertilizer (Z) is an organic fertilizer [organic fertilizer (Z_{O}), herein after] or an organo-mineral fertilizer [fertilizer (Z_{OM}), herein after]. Said organic fertilizer (Z_{O}) and organo-mineral fertilizer (Z_{OM}) typically comprise compounds comprising nitrogen atoms and/or phosphorus atoms and/or potassium atoms or mixtures thereof.

For the purpose of our invention, the content of nitrogen atoms, phosphorus atoms and potassium atoms comprised in the fertilizer (Z) of the present invention is indicated by the N-P-K value, wherein N is nitrogen content by weight percentage, P is phosphorus content by weight percentage and K is potassium content by weight percentage, all weight percentages relative to the total weight of the fertilizer (Z). The content of nitrogen atoms, phosphorus atoms, and potassium atoms are calculated as that of elemental nitrogen atom, P₂O₅ and K₂O respectively.

By way of example, a fertilizer (Z) having a N-P-K value of 16-4-8 refers to a fertilizer comprising nitrogen atoms in amount of 16 wt. % N, phosphorus atoms in an amount corresponding to an amount of 4 wt. % of P₂O₅, and potassium atoms in an amount corresponding to an amount of 8 wt. % K₂O, all wt. % relative to the total weight of the fertilizer (Z).

For the purpose of this invention, the term "organic fertilizers" is intended to refer to fertilizers derived from natural components of animal or/and vegetable origin.

For the purpose of this invention, the term "organo- mineral fertilizers" is intended to refer to organic fertilizers, as defined above, which were enriched with mineral nutrients such as but not limited to urea, potassium nitrate, superphosphate, ammonium sulfate, mono-ammonium phosphate, di-ammonium phosphate, potassium sulfate, potassium chloride, magnesium sulfate, magnesium oxide, trace elements such as boron, copper, iron, manganese, molybdenum or zinc.

In the method according to the present invention, organic fertilizer (Z_{O}) is chosen among the group of organic fertilizers with a high nitrogen content [N-rich organic fertilizer (Z_{O}^{N}), herein after]. Said N-rich organic fertilizers (Z_{O}^{N}) are known to those skilled in the art of lawn and turf maintenance.

For the purpose of the invention, the term "organic fertilizers with a high nitrogen content" is intended to denote fertilizers in which the weight ratio of nitrogen atoms to phosphorus atoms and potassium atoms respectively, is equal to or at least 2. The content of nitrogen atoms, phosphorus atoms, and potassium atoms are calculated as that of elemental nitrogen atom, P₂O₅ and K₂O respectively.

Among N-rich organic fertilizers (Z_{O}^{N}) mention may be notably made of blood meal, hoof and horn meal, cottonseed meal, feather meal, leather meal, hair meal, meat meal, cocoa shells, coffee husks, soybean meal and seaweed meal.

The following commercially available N-rich organic fertilizers (Z_{O}^{N}) are typical examples of N-rich organic fertilizers (Z_{O}^{N}) suitable for use in the formulation (F) of the present invention: VIANO BLOOD MEAL 13%N; VIANO HOOF & HORNMEAL 13%N.

In the method according to the present invention, organic fertilizer (Z_{O}) is chosen among the group of organic fertilizers with a high phosphorus content [P-rich organic fertilizer (Z_{O}^{P}), herein after]. Said P-rich organic fertilizers (Z_{O}^{P}) are known to those skilled in the art of lawn and turf maintenance.

For the purpose of the invention, the term "organic fertilizers with a high phosphorus content" is intended to denote fertilizers in which the weight ratio of phosphorus atoms to nitrogen atoms and potassium atoms respectively, is equal to or at least 2. The content of nitrogen atoms, phosphorus atoms, and potassium atoms are calculated as that of elemental nitrogen atom, P₂O₅ and K₂O respectively.

Among P-rich organic fertilizers (Z_{O}^{P}) mention may be notably made of meat and bone meal, degelatinised bone meal and bone bicalciumphosphate.

Non limitative examples of commercially available P-rich organic fertilizers (Z_{O}^{P}) suitable for use in the formulation (F) of the present invention include: VIANO BONE MEAL 16% P₂0₅ , 6% N.

In the method according to the present invention, organic fertilizer (Z_{O}) is chosen among the group of organic fertilizers with a high potassium content [K-rich organic fertilizer (Z_{O}^{K}), herein after]. Said K-rich organic fertilizers (Z_{O}^{K}) are known to those skilled in the art of lawn and turf maintenance.

For the purpose of the invention, the term "organic fertilizers with a high potassium content" is intended to denote fertilizers in which the weight ratio of potassium atoms to nitrogen atoms and phosphorus atoms respectively, is equal to or at least 2. The content of nitrogen atoms, phosphorus atoms, and potassium atoms are calculated as that of elemental nitrogen atom, P₂O₅ and K₂O respectively.

Among K-rich organic fertilizers (Z_{O}^{K}) mention may be notably made of vinasse, greensand, wood ash and kelp meal.

For the purpose of the present invention the term "vinasse" means a solution originating from bioethanol production, alcohol production, sugar production, fermentation process or yeast production, preferably from yeast production. The raw material for vinasse is typically corn, sugar cane or sugar beet. A review describing vinasse is available notably from Renato de Mello Prado et al. (Applied and Environmental Soil Science (2013), 8 pages).

Non limitative examples of commercially available K-rich organic fertilizers (Z_{O}^{K}) suitable for use in the formulation (F) of the present invention include: VIANO VINASSE 38% K₂O; VIANO TURFPROF POTASH 0-0-32; VIANO BIOLICQ 3-0-6.

In the method according to the present invention, organo-mineral fertilizer (Z_{OM}) is chosen among the group of organo-mineral fertilizers with a high nitrogen content [N-rich organo-mineral fertilizer (Z_{OM}^{N}), herein after]. Said N-rich organo-mineral fertilizers (Z_{OM}^{N}) are known to those skilled in the art of lawn and turf maintenance.

For the purpose of the invention, the term "organo-mineral fertilizers with a high nitrogen content" is intended to denote fertilizers in which the weight ratio of nitrogen atoms to phosphorus atoms and potassium atoms respectively, is equal to or at least 2. The content of nitrogen atoms, phosphorus atoms, and potassium atoms are calculated as that of elemental nitrogen atom, P₂O₅ and K₂O respectively.

The following commercially available N-rich organo-mineral fertilizers (Z_{OM}^{N}) are typical examples of N-rich organo-mineral fertilizers (Z_{OM}^{N}) suitable for use in the formulation (F) of the present invention: VIANO LAWN FERTILISER 9-3-3 (+3MgO); VIANO LAWN BOOSTER 12-3-3 (+3MgO); VIANO LAWN 2 in 1 9-3-3 (+3MgO); VIANO LAWN 4 in 1 9-3-3 (+3MgO); VIANO TURFPROF GREEN BOOST 16-3-8 (+2MgO) + 1Fe + bacteria; VIANO TURFPROF START 18-3-3.

In the method according to the present invention, organo-mineral fertilizer (Z_{OM}) is chosen among the group of organo-mineral fertilizers with a high phosphorus content [P-rich organo-mineral fertilizer (Z_{OM}^{P}), herein after]. Said P-rich organo-mineral fertilizers (Z_{OM}^{P}) are known to those skilled in the art of lawn and turf maintenance.

For the purpose of the invention, the term "organo-mineral fertilizers with a high phosphorus content" is intended to denote fertilizers in which the weight ratio of phosphorus atoms to nitrogen atoms and potassium atoms respectively, is equal to or at least 2. The content of nitrogen atoms, phosphorus atoms, and potassium atoms are calculated as that of elemental nitrogen atom, P₂O₅ and K₂O respectively.

Non limitative examples of commercially available P-rich organo-mineral fertilizers (Z_{OM}^{P}) suitable for use in the formulation (F) of the present invention include: VIANO MIXPROF FOS 5-25-0.

In a more preferred embodiment of the method according to the present invention, organo-mineral fertilizer (Z_{OM}) is chosen among the group of organo-mineral fertilizers (Z_{OM}) with a high potassium content [K-rich organo-mineral fertilizer (Z_{OM}^{K}), herein after]. Said K-rich organo-mineral fertilizers (Z_{OM}^{K}) are known to those skilled in the art of lawn and turf maintenance.

For the purpose of the invention, the term "organo-mineral fertilizers with a high potassium content" is intended to denote fertilizers in which the weight ratio of potassium atoms to nitrogen atoms and phosphorus atoms respectively, is equal to or at least 2. The content of nitrogen atoms, phosphorus atoms, and potassium atoms are calculated as that of elemental nitrogen atom, P₂O₅ and K₂O respectively.

Non limitative examples of commercially available K-rich organo-mineral fertilizer (Z_{OM}^{K}) suitable for use in the formulation (F) of the present invention include: VIANO IWTM 5-5-20 (+3MgO); VIANO AROMATIC PLANT FOOD 5-6-13 (+4MgO); VIANO LEGUMA 5-6-13 (+4MgO); VIANO CONIFER- & TAXUS FOOD 5-6-13 (+4MgO); VIANO BOXWOOD PLANT FOOD 5-6-13 (+4MgO); VIANO HORTENSIA PLANT FOOD 5-6-13 (+4MgO); VIANO AUTUMN TREATMENT 6-6-16 (+2MgO); VIANO TURFPROF AUTUMN 5-5-20 (+3MgO).

As to the amount of the at least one fertilizer (Z) it is understood that the skilled person in the art will practise said at least one fertilizer (Z) in a suitable amount according to standard and general practice known by said skilled person in the art.

According to certain embodiments of the present invention, the weight ratio of the at least one composition (C) to the at least one fertilizer (Z) is equal to or at least 1:10, preferably equal to or at least 1:5, more preferably equal to or at least 1:2.

According to a particular embodiment of the present invention, the weight percent of the fertilizer (Z), as detailed above, relative to the total weight of the formulation (F) is generally equal to or at least 0.9 wt. %, preferably equal to or at least 1.8 wt. %, preferably equal to or at least 2.7 wt. %, more preferably equal to or at least 3.6 wt. %, most preferably equal to or at least 4.5 wt. %. It is further understood that, when present, the weight percent of the fertilizer (Z), as detailed above, relative to the total weight of the formulation (F) is generally equal to or less than 27.0 wt. %, preferably equal to or less than 24.3 wt. %, more preferably equal to or less than 22.5 wt. %, even more preferably equal to or less than 20.7 wt. %, and most preferably equal to or less than 18.0 wt. %.

The fertilizer (Z) as used in the method of the present invention, as detailed above, may be a liquid fertilizer or a solid fertilizer.

In one embodiment of the method according to the present invention, the fertilizer (Z) is a liquid fertilizer [liquid fertilizer (Z_{L}) herein after].

For the purpose of the present invention, the term "liquid fertilizer" is intended to refer to a fertilizer is the form of a solution, a dispersion such as notably an emulsion and a suspension, a foam, preferably in the form of a solution.

In another embodiment of the method according to the present invention the fertilizer (Z) is a solid fertilizer [solid fertilizer (Z_{S}) herein after].

For the purpose of the present invention, the term "solid fertilizer" is intended to refer to a fertilizer in the form of powders, dusts, tablets, pellets, or a granular form such as granules, microcrumbs and regular crumbs or mixtures thereof, preferably a granular form.

For the purpose of the present invention, the term "granules" is intended to refer to particles of any shape and any density with a size of at least 2.5 mm, preferably at least 2.9 mm, more preferably at least 3.2 mm, most preferably at least 3.5 mm.

It is further understood that, the upper limit of the size of the granules is not restricted but advantageously equal to or less than 9.0 mm, preferably equal to or less than 8.0 mm, more preferably equal to or less than 7.5 mm, most preferably equal to or less than 7.0 mm.

For the purpose of the present invention, the term "microcrumbs" is intended to refer to particles of any shape and any density with a size of at least 0.1 mm, preferably at least 0.3 mm, more preferably at least 0.5 mm, most preferably at least 0.7 mm.

It is further understood that, the upper limit of the size of the microcrumbs is advantageously equal to or less than 3.0 mm, preferably equal to or less than 2.7 mm, more preferably equal to or less than 2.5 mm, even more preferably equal to or less than 2.3 mm, most preferably equal to or less than 2.1 mm.

For the purpose of the present invention the term "regular crumbs", is meant to refer to particles of any shape and any density with a size of at least 1.0 mm, preferably at least 1.5 mm, more preferably at least 1.9 mm, most preferably at least 2.1 mm.

It is further understood that, the upper limit of the size of the regular crumbs is advantageously equal to or less than 5.0 mm, preferably equal to or less than 4.5 mm, more preferably equal to or less than 4.1 mm, even more preferably equal to or less than 3.8 mm, most preferably equal to or less than 3.5 mm.

Generally, particle sizes such as the size of granules, microcrumbs and regular crumbs as defined above, may be measured by known methods in the art, in particular by sieving with screens as notably described in ISO 8397:1988.

It is understood that the particle size expressed in mm refers to the median (or geometric mean) of the particle sizes corresponding to P(X<x) = 50 wt. %, wherein X is the particle size expressed in mm, P is the percentage by weight of particles smaller than the sieve screen size x expressed in mm, relative to the total weight of the sieved sample.

According to certain embodiments of the method according to the present invention, formulation (F) may further comprise other common additional ingredients [ingredient (I_{F}), herein after] to enhance the appearance, storage, transport, handling and/or performance of the product. Said ingredients (I_{F}) are known to those skilled in the art of agricultural or turf management chemical compositions. Typical ingredients (I_{F}) may include, but are not limited to, suspending agents and similar ingredients to enhance the shelf life of the product, colorants, fragrances, solvents, thinning agents and thickening agents, secondary nutrients such as but not limited to sources of calcium, magnesium and sulfur, micronutrients such as but not limited to sources of boron, cobalt, iron, manganese, molybdenum, zinc, and copper, any material that facilitates the application of formulation (F) such as spreading or sticking agents and any other materials customarily employed in formulating pesticides, herbicides, miticides or fungicides, especially plant protection agents, such as other herbicides, pesticides, insecticides, miticides, acaricides, nematicides, fungicides, bactericides, rodenticides and growth-regulating agents.

As to the amount of the ingredient (I_{F}) it is understood that the skilled person in the art will practise the ingredient (I_{F}) in a suitable amount according to standard and general practice known by said skilled person in the art.

According to certain embodiments of the present invention, the weight ratio of the at least one composition (C) to the ingredient (I_{F}) is equal to or at least 1:10, preferably equal to or at least 1:5 , more preferably equal to or at least 1:2.

The inventors have surprisingly found that, by using one or more composition (C) comprised in a formulation (F), as detailed above, in the method of the present invention, dicotyledonous weed infestations can be treated. As non-limiting examples mention may be made of dicotyledonous weeds of the genera: *Cassia, Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Melilotus, Medicago Lupulina, Ranunculus, Sphenoclea, Taraxacum, Plantago, Epilobium, Rubus, Achillea, Rumex, Lotus, Bellis and the like,* preferably *Trifolium, Melilotus, Medicago Lupulina, Ranunculus, Bellis, Taraxacum, Sonchus,* and *Chenopodium,* more preferably *Trifolium, Melilotus,* and *Medicago Lupulina,* and most preferably *Trifolium.*

The inventors have further surprisingly found that said dicotyledonous weed infestations can be selectively treated in presence of monocotyledons. As non-limiting examples mention may be made of monocotyledons of the genera: *Axonopus, Eremochloa ophiuroides, Echinochloa, Eriochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Dactyloctenium, Agrostis, Alope curus, Apera, Aegilops, Phalaris,* preferably *Axonopus, Eremochloa ophiuroides, Echinochloa, Eriochloa, Setaria, Digitaria, Poa, Festuca, Lolium, Cynodon, Paspalum, Agrostis,* and more preferably *Poa*.

Within the context of the present invention, the genera *Trifolium* and *Poa* refer to common clovers and grasses, respectively, known to the person skilled in the art. Clover is a common name for plants of the genus *Trifolium.* Grass collectively refers to the Poa genus as a large and nearly ubiquitous family of monocotyledonous flowering plants.

The formulation (F), in particular the liquid formulation (F_{L}), of the present invention can be prepared by a variety of methods known in the art.

In one embodiment of the present invention, the method for the manufacturing of the liquid formulation (F_{L}), as detailed above, comprises intimate admixing of the at least one composition (C), water, optionally the at least one fertilizer (Z) and optionally any additional ingredient (I_{F}). When present, the at least one fertilizer (Z) is optionally dissolved in a solvent [solvent (sol), herein after].

Typically said intimate admixing of the at least one composition (C), water, optionally the at least one fertilizer (Z) and optionally any additional ingredient (I_{F}), as detailed above, may be carried out by using traditional mixers and blenders, high intensity mixers and electric stirrers.

It is understood that the skilled person in the art will carry out said intimate admixing according to general practice such as notably using optimal times, speeds, weights, volumes and batch quantities.

Among solvents (sol) suitable for dissolving the at least one fertilizer (Z), in particular a solid fertilizer (Z_{S}), as detailed above, mention may be notably made of water.

Suitable methods for dissolving the at least one fertilizer (Z) are notably described in U.S. Pat. No. 2,950,961.

In the method of the present invention, the area for possible dicotyledonous weed infestation may notably be agricultural fields, turf and ornamentals, lawns, in between perennial plants, in borders or in other garden areas, in pots or containers comprising desirable plants (e.g. container cultivation and/or pot culture), between shrubs and nursery trees, rights of way, concrete pathways and driveways, etc.

If the formulation (F) comprising the at least one composition (C), as detailed above, is applied post-emergence to the green parts of the unwanted dicotyledonous vegetation, growth likewise stops drastically a very short time after the treatment, and the unwanted dicotyledonous vegetation remains at the growth stage of the point of time of application, or they die completely after a certain time, so that in this manner infestation of unwanted dicotyledonous vegetation is eliminated very early and in a sustained manner.

According to the method of the present invention, the formulation (F), in particular the liquid formulation (F_{L}), may be applied to a broad area needing treatment in any suitable usual manner according to standard practice known by the skilled in the art taking into account factors such as temperature and weather conditions.

According to the method of the present invention, the formulation (F), in particular the liquid formulation (F_{L}), may be foliarly applied to an area having a dicotyledonous weed infestation

Among suitable manners for applying the formulation (F), in particular the liquid formulation (F_{L}), mention may be notably made of spraying, atomizing, vaporizing, watering, squirting, sprinkling, pouring, fumigating, and the like by using conventional equipment such as a handpump, a backpack sprayer, a boomsprayer, and the like.

It is a further object of the present invention to provide a use of the composition (C), as detailed above, for the herbicidal treatment of an area having a dicotyledonous weed infestation.

Generally, all aspects of the present invention discussed herein in the context of a method for the herbicidal treatment of an area having a dicotyledonous weed infestation according to the invention apply mutatis mutandis thereof to the use
of the composition (C), as detailed above, for the herbicidal treatment of an area having a dicotyledonous weed infestation according to the invention, as defined above.

### EXAMPLES:

The invention will now be described in more details with reference to the following examples, whose purpose is merely illustrative and not intended to limit the scope of the invention.

### Example 1:

Water-based formulations 1 and 2 were applied to adjacent plots of lawn, plots of 20 by 25 cm, where a *Trifolium* genus infestation (i.e. it is clover) was clearly present in said plots of lawn containing *Poa* genus grasses (i.e. it is grass). The two formulations 1 and 2, as listed in Table 1, were tested in duplicate and compared to an untreated control. Each formulation was water-based and applied by spraying them uniformly over the plots resulting in an application of 100 mL of each formulation per square meter [m², herein after], resulting in applying 1000 mg of composition (C) per m² for formulation 1, respectively 1500 mg of composition (C) per m² for formulation 2. The components of composition (C) are described in Table 1. The different treatments were randomly distributed over the different plots. The *Trifolium* genus (i.e. it is clover) and *Poa* genus (i.e. it is grass) conditions on each plot were initially rated on day 0 after 6 hours. On day 0, all of the formulations were applied once. The clover and grass conditions of each plot were rated again on day 4, day 7 and day 29.

**TABLE 1**

| **Formulation** | **Components** | **Weight ratio: composition (C)/water** |
|---|---|---|
| 1 | Composition (C) includes 92.09 wt. % of compound (A₁) of formula (Iₐ₁) wherein R³ is hydrogen and R', R¹, R² are methyl groups; 1.06 wt. % of compound (A₂) of general formula (Iₐ₂) wherein R³ is hydrogen and R', R¹, R² are methyl groups; 2.02 wt. % of compound (A₃) of general formula (Iₐ₃) wherein R', R¹, R² are methyl groups; with all wt. % relative to the total weight of the mixture. | 1:99 |
| 2 | Equal to composition (C) of formulation 1 | 1.5:98.5 |

On day 0 after 6 hours, day 4, day 7 and day 29 an assessment of the clover condition on the different plots was carried out by three observers (O1 - O3). The visual observations were converted to a mark from 0 to 10. Whereby 0 means no effect on the clover at all and 10 means a plot with only discolored and/or dead clover. The assessment is not based on the percentage of clover present in the plot but on the condition of the clover in the plot. The results of the assessment on day 0 after 6 hours, day 4, day 7 and day 29 are listed in Table 2, Table 3, Table 4 and Table 5, respectively.

Equally, on day 0 after 6 hours, day 4, day 7 and day 29 an assessment of the grass condition on the same different plots was carried out by the same three observers (O1 - O3). The visual observations were converted to a mark from 0 to 10. Whereby 0 means no effect on the grass at all and 10 means a plot with only discolored and/or dead grass. The assessment is not based on the percentage of grass present in the plot but on the condition of the grass in the plot. The results of the assessment on day 0 after 6 hours, day 4, day 7 and day 29 are listed in Table 2, Table 3, Table 4 and Table 5, respectively.

**TABLE 2**

| **Assessment on day 0 after 6 hours** | | | | | | | | | | | | |
|---|---|---|---|---|---|---|---|---|---|---|---|---|
| **Formulation** | **Observer O1** | | | | **Observer O2** | | | | **Observer O3** | | | |
| | **Clover A** | **Clover B** | **Grass A** | **Grass B** | **Clover A** | **Clover B** | **Grass A** | **Grass B** | **Clover A** | **Clover B** | **Grads A** | **Grass B** |
| **Untreated control** | 0 | - | 0 | - | 0 | - | 0 | - | 0 | - | 0 | - |
| **1** | 6 | 6 | 0 | 0 | 6 | 7 | 0 | 0 | 6 | 6 | 0 | 0 |
| **2** | 8 | 8 | 0 | 0 | 9 | 8 | 0 | 0 | 8 | 8 | 0 | 0 |

6 hours after the treatment of the different plots, all observers (O1 - O3) reported a visible effect of formulation 1 on clover. The effect on clover was more pronounced for the treatment of the different plots with formulation 2, which is more concentrated (i.e. less diluted) compared to formulation 1. For both formulations 1 and 2 no effect on grass was perceptible.

**TABLE 3**

| **Assessment after 4 days** | | | | | | | | | | | | |
|---|---|---|---|---|---|---|---|---|---|---|---|---|
| **Formulation** | **Observer O1** | | | | **Observer O2** | | | | **Observer O3** | | | |
| | **Clover A** | **Clover B** | **Grass A** | **Grass B** | **Clover A** | **Clover B** | **Grass A** | **Grass B** | **Clover A** | **Clover B** | **Grass A** | **Grass B** |
| **Untreated control** | 0 | - | 0 | - | 0 | - | 0 | - | 0 | - | 0 | - |
| **1** | 7 | 8 | 0 | 0 | 7 | 7 | 1 | 0 | 7 | 7 | 1 | 0 |
| **2** | 9 | 9 | 1 | 0 | 9 | 9 | 1 | 1 | 10 | 9 | 1 | 0 |

4 days after the treatment of the different plots, all observers (O1 - O3) reported a visible effect on clover for both formulations 1 and 2.

**TABLE 4**

| **Assessment after 7 days** | | | | | | | | | | | | |
|---|---|---|---|---|---|---|---|---|---|---|---|---|
| **Formulation** | **Observer O1** | | | | **Observer O2** | | | | **Observer O3** | | | |
| | **Clover A** | **Clover B** | **Grass A** | **Grass B** | **Clover A** | **Clover B** | **Grass A** | **Grass B** | **Clover A** | **Clover B** | **Grass A** | **Grass B** |
| **Untreated control** | 0 | - | 0 | - | 0 | - | 0 | - | 0 | - | 0 | - |
| **1** | 8 | 7 | 0 | 0 | 8 | 7 | 1 | 0 | 8 | 7 | 1 | 0 |
| **2** | 9 | 9 | 1 | 2 | 9 | 9 | 1 | 2 | 10 | 10 | 1 | 1 |

7 days after the treatment of the different plots, the effect on clover was still visible.

**TABLE 5**

| **Assessment after 29 days** | | | | | | | | | | | | |
|---|---|---|---|---|---|---|---|---|---|---|---|---|
| **Formulation** | **Observer O1** | | | | **Observer O2** | | | | **Observer O3** | | | |
| | **Clover A** | **Clover B** | **Grass A** | **Grass B** | **Clover A** | **Clover B** | **Grass A** | **Grass B** | **Clover A** | **Clover B** | **Grass A** | **Grass B** |
| **Untreated control** | 0 | - | 0 | - | 0 | - | 0 | - | 0 | - | 0 | - |
| **1** | 5 | 5 | 0 | 0 | 5 | 5 | 1 | 0 | 6 | 5 | 1 | 0 |
| **2** | 7 | 8 | 0 | 0 | 6 | 7 | 0 | 1 | 7 | 6 | 0 | 0 |

29 days after treatment of the different plots, it was perceptible that said plots contained less clover in comparison with the untreated controls.

**TABLE 6**

| **Average results** | | | | | | | | |
|---|---|---|---|---|---|---|---|---|
| **Formulation** | **Observer O1** | | **Observer O2** | | **Observer O3** | | **Observer total** | |
| | **Clover** | **Grass** | **Clover** | **Grass** | **Clover** | **Grass** | **Clover** | **Grass** |
| **Untreated control** | 0 | 0 | 0 | 0 | 0 | 0 | 0 | 0 |
| **1** | 6.500 | 0 | 6.500 | 0.375 | 6.500 | 0.375 | **6.500** | **0.250** |
| **2** | 8.375 | 0.500 | 8.250 | 0.750 | 8.500 | 0.375 | **8.375** | **0.542** |

The results in Table 6 show that both formulations 1 and 2 have an average clover-eliminating effect of 65.00% and 83.75%, respectively. Furthermore, the results in Table 6 demonstrate that both formulations 1 and 2 have a slight adverse effect on grass of 2.50% and 5.42%, respectively.

The results in Table 6 show that the composition (C) in formulations 1 and 2 as used in the method of the present invention resulted in a significant effect in view of the selective herbicidal treatment of clover, as it reduces the presence of clover in clover-infested plots of lawn containing grass in the long term. A repetitive use or application of formulations 1 or 2 is advised to fully eliminate clover. Furthermore, composition (C) in formulations 1 and 2 as used in the method of the present invention and applied on said clover-infested plots of lawn containing grass has a limited or minor effect to the present grass in the treated plots, which said limited or minor effect to the present grass in the treated plots is also limited in time.

## Claims

1. A method for the herbicidal treatment of an area having a dicotyledonous weed infestation wherein the method comprises applying a formulation [formulation (F), herein after] onto said area and wherein said formulation (F) comprises at least one composition [composition (C), herein after] wherein said composition (C) comprises a compound (A₁) of formula (Iₐ₁) herein below: 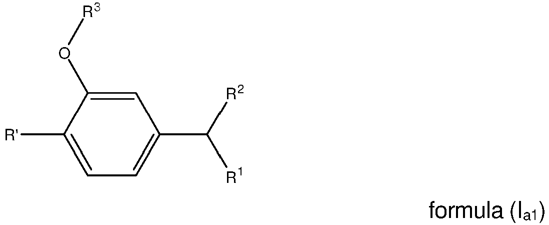 wherein
- R³ is a hydrogen;
- R' is a methyl group;
- R¹ and R² are methyl groups;
wherein said compound (A₁) of formula (Iₐ₁) is present in an amount from 82.0 to 98.0 weight percent [wt. %, herein after], relative to the total weight of the composition (C), and
wherein said at least one composition (C) is applied in an amount from 100 to 3000 mg per square meter [m², herein after] of said area,
wherein the dicotyledonous weed infestation is selectively treated in the presence of monocotyledons, and
wherein said dicotyledonous weed is selected from the group consisting of *Trifolium, Melilotus,* and *Medicago Lupulina,* and
wherein said monocotyledons are *Poa.*

2. The method, according to claim 1, wherein the composition (C) further comprises a compound (A₂) of formula (Iₐ₂) and/or a compound (A₃) of formula (Iₐ₃): 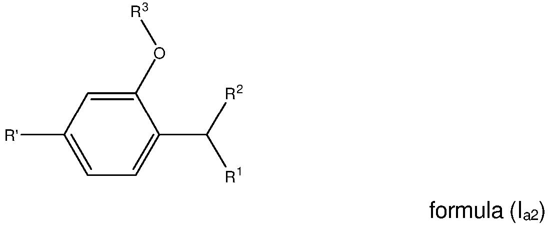 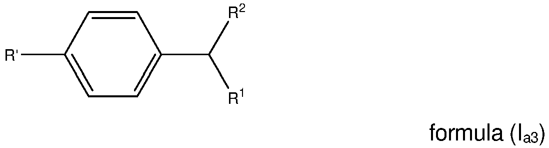 wherein
- R³ is a hydrogen;
- R' is a methyl group; and
- R¹ and R² are methyl groups.

3. The method, according to claim 1 or 2, wherein the composition (C) comprises at least one of other ingredients [ingredient (I_{c}), herein after] including, but not limited to, γ-terpinene, β-caryophyllene, α-thujene, α-pinene, camphene, sabinene, β-pinene, β-myrcene, α-terpinene, limonene, cis-ocimene, trans-ocimene, linalool, pinocamphone, borneol, isopinocamphone, terpin-4-ol, α-terpineol, β-bourbonene, germacrene-D, spathulenol and caryophyllene oxide.

4. The method, according to any one of claims 1 to 3, wherein the composition (C) is derived from plant extracts selected from the group consisting of extracts of *Allium sp., Aloysia sp., Anethum sp., Anthriscus sp., Armorica sp., Artemisia sp., Borago sp., Capsicum sp., Carum sp., Chamaemelum sp., Chelidonium sp., Coriandrum sp., Cymbopogon sp., Foeniculum sp., Hyssopus sp., Lavandula sp., Laurus sp., Levisticum sp., Lippia sp., Melissa sp., Mentha sp., Monarda sp., Myrrhis sp., Ocimum sp., Origanum sp., Pelargonium sp., Pimpinella sp., Rosmarinus sp., Ruta sp., Salvia sp., Sanguisorba sp., Satureja sp., Thymus sp., Valeriana sp..*

5. The method, according to any one of claims 1 to 4, wherein the composition (C) comprised in the formulation (F) is applied to an area having a dicotyledonous weed infestation in an amount from 150 to 2700 mg per m² of said area, preferably from 300 to 2500 mg per m² of said area, more preferably from 450 to 2350 mg per m² of said area, and most preferably from 600 to 2250 mg per m² of said area.

6. The method, according to any one of claims 1 to 5, wherein the formulation (F) is a liquid formulation [liquid formulation (F_{L}), herein after], preferably the liquid formulation (F_{L}) is a water-based formulation comprising water and the at least one composition (C).

7. The method, according to claim 6, wherein the liquid formulation (F_{L}) is applied by spraying, atomizing, vaporizing, watering, squirting, sprinkling, pouring, or fumigating.

8. The method, according to any one of claims 1 to 7, wherein the formulation (F) comprises at least one fertilizer [fertilizer (Z), herein after], wherein the fertilizer (Z) is an organic fertilizer [organic fertilizer (Z_{O}), herein after] or an organo-mineral fertilizer [fertilizer (Z_{OM}), herein after].

9. The method, according to any one of claims 1 to 8, wherein the formulation (F) may further comprise at least one additional ingredient [ingredient (I_{F}), herein after] selected from the group consisting of suspending agents and agents to enhance the shelf life of the product, colorants, fragrances, solvents, thinning agents and thickening agents, secondary nutrients, micronutrients, spreading or sticking agents, herbicides, pesticides, insecticides, miticides, acaricides, nematicides, fungicides, bactericides, rodenticides and growth-regulating agents.

10. A use of the composition (C), as defined according to any one of claims 1 to 4, for the selective herbicidal treatment of an area having a dicotyledonous weed infestation in presence of monocotyledons, wherein said dicotyledonous weed is selected from the group consisting of *Trifolium, Melilotus,* and *Medicago Lupulina,* and
wherein said monocotyledons are *Poa.*

## Patentansprüche

1. Ein Verfahren zur herbiziden Behandlung eines mit dikotylen Unkräutern befallenen Bereichs, wobei das Verfahren die Aufbringung einer Rezeptur [nachstehend Rezeptur (F)] auf den Bereich umfasst und wobei die Rezeptur (F) mindestens eine Zusammensetzung [nachstehend Zusammensetzung (C)] umfasst, wobei die Zusammensetzung (C) eine Verbindung (A₁) der Formel (Iₐ₁) hier unten umfasst: 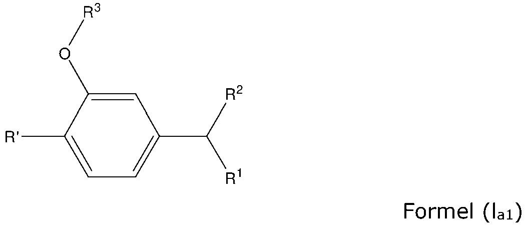 wobei
- R³ ein Wasserstoff ist;
- R' eine Methylgruppe ist;
- R¹ und R² Methylgruppen sind;
wobei die Verbindung (A₁) der Formel (Iₐ₁) in einer Menge von 82,0 bis 98,0 Gewichtsprozent [nachstehend Gew.-%] in Bezug auf das Gesamtgewicht der Zusammensetzung (C) vorhanden ist, und
wobei die mindestens eine Zusammensetzung (C) in einer Menge von 100 bis 3.000 mg pro Quadratmeter [nachstehend m²] des Bereichs aufgebracht wird,
wobei der Befall mit dikotylen Unkräutern in der Anwesenheit von Monokotylen selektiv behandelt wird, und
wobei die dikotylen Unkräuter ausgewählt sind aus der Gruppe bestehend aus *Trifolium, Melilotus* und *Medicago lupulina,* und
wobei die Monokotylen *Poa* sind.

2. Das Verfahren, nach Anspruch 1, wobei die Zusammensetzung (C) ferner eine Verbindung (A₂) der Formel (Iₐ₂) und/oder eine Verbindung (A₃) der Formel (Iₐ₃) umfasst: 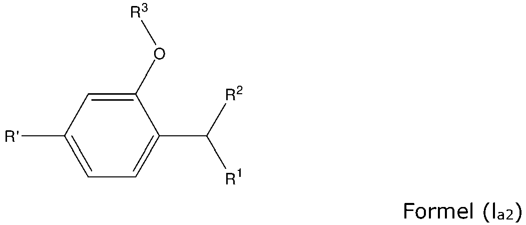 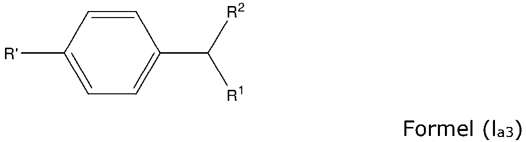 wobei
- R³ ein Wasserstoff ist;
- R' eine Methylgruppe ist; und
- R¹ und R² Methylgruppen sind.

3. Das Verfahren, nach Anspruch 1 oder 2, wobei die Zusammensetzung (C) mindestens einen von anderen Bestandteilen [nachstehend Bestandteil (I_{c})] umfasst, einschließlich, aber nicht beschränkt auf γ-Terpinen, β-Caryophyllen, α-Thujen, α-Pinen, Camphen, Sabinen, β-Pinen, β-Myrcen, α-Terpinen, Limonen, cis-Ocimen, trans-Ocimen, Linalool, Pinocamphon, Borneol, Isopinocamphon, Terpin-4-ol, α-Terpineol, β-Bourbonen, Germacren-D, Spathulenol und Caryophyllenoxid.

4. Das Verfahren, nach irgendeinem der Ansprüche 1 bis 3, wobei die Zusammensetzung (C) von Pflanzenextrakten ausgewählt aus der Gruppe bestehend aus Extrakten von *Allium sp., Aloysia sp., Anethum sp., Anthriscus sp., Armorica sp., Artemisia sp., Borago sp., Capsicum sp., Carum sp., Chamaemelum sp., Chelidonium sp., Coriandrum sp., Cymbopogon sp., Foeniculum sp., Hyssopus sp., Lavandula sp., Laurus sp., Levisticum sp., Lippia sp., Melissa sp., Mentha sp., Monarda sp., Myrrhis sp., Ocimum sp., Origanum sp., Pelargonium sp., Pimpinella sp., Rosmarinus sp., Ruta sp., Salvia sp., Sanguisorba sp., Satureja sp., Thymus sp., Valeriana sp.* abgeleitet ist.

5. Das Verfahren, nach irgendeinem der Ansprüche 1 bis 4, wobei die in der Rezeptur (F) enthaltene Zusammensetzung (C) auf einen Bereich, der mit dikotylen Unkräutern befallen ist, in einer Menge von 150 bis 2.700 mg pro m² des Bereichs, bevorzugt von 300 bis 2.500 mg pro m² des Bereichs, noch besser von 450 bis 2.350 mg pro m² des Bereichs, und am besten von 600 bis 2.250 mg pro m² des Bereichs aufgebracht wird.

6. Das Verfahren, nach irgendeinem der Ansprüche 1 bis 5, wobei die Rezeptur (F) eine flüssige Rezeptur ist [nachstehend flüssige Rezeptur (F_{L})], wobei die flüssige Rezeptur (F_{L}) bevorzugt eine Rezeptur auf Wasserbasis ist, welche Wasser und die mindestens eine Zusammensetzung (C) umfasst.

7. Das Verfahren, nach Anspruch 6, wobei die flüssige Rezeptur (F_{L}) durch Sprühen, Zerstäuben, Verdampfen, Wässern, Spritzen, Sprenkeln, Gießen oder Begasen aufgebracht wird.

8. Das Verfahren, nach irgendeinem der Ansprüche 1 bis 7, wobei die Rezeptur (F) mindestens ein Düngemittel [nachstehend Düngemittel (Z)] umfasst, wobei das Düngemittel (Z) ein organisches Düngemittel [nachstehend organisches Düngemittel (Z_{O})] oder ein organisch-mineralisches Düngemittel [nachstehend Düngemittel (Z_{OM})] ist.

9. Das Verfahren, nach irgendeinem der Ansprüche 1 bis 8, wobei die Rezeptur (F) ferner mindestens einen zusätzlichen Bestandteil [nachstehend Bestandteil (I_{F})] ausgewählt aus der Gruppe bestehend aus Suspendiermitteln und die Haltbarkeit des Produkts verlängernden Mitteln, Farbstoffen, Duftstoffen, Lösungsmitteln, Verdünnungsmitteln und Verdickungsmitteln, sekundären Nährstoffen, Mikronährstoffen, Netz- oder Haftmitteln, Herbiziden, Pestiziden, Insektiziden, Mitiziden, Akariziden, Nematiziden, Fungiziden, Bakteriziden, Rodentiziden und Wachstumsregulatoren umfassen darf.

10. Eine Verwendung der Zusammensetzung (C), wie definiert nach irgendeinem der Ansprüche 1 bis 4, für die selektive herbizide Behandlung eines Bereichs, der in Anwesenheit von Monokotylen mit dikotylen Unkräutern befallen ist, wobei die dikotylen Unkräuter ausgewählt sind aus der Gruppe bestehend aus *Trifolium, Melilotus* und *Medicago lupulina,* und
wobei die Monokotylen *Poa* sind.

## Revendications

1. Méthode de traitement herbicide d'une zone infestée par des mauvaises herbes dicotylédones, dans laquelle la méthode comprend l'application d'une formulation [formulation (F), ci-après] sur ladite zone et dans laquelle ladite formulation (F) comprend au moins une composition [composition (C), ci-après] dans laquelle ladite composition (C) comprend un composé (A₁) de formule (Iₐ₁) ci-dessous : 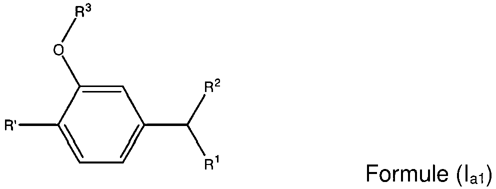 dans laquelle
- R³ est un hydrogène ;
- R' est un groupe méthyle ;
- R¹ et R² sont des groupes méthyles ;
dans laquelle ledit composé (A₁) de formule (Iₐ₁) est présent à raison de 82,0 à 98,0 pour cent en poids [% en poids, ci-après] par rapport au poids total de la composition (C), et
dans laquelle ladite au moins une composition (C) est appliquée à raison de 100 à 3 000 mg par mètre carré [m², ci-après] de ladite zone,
dans laquelle l'infestation de mauvaises herbes dicotylédones est traitée sélectivement en présence de monocotylédones, et
dans laquelle lesdites mauvaises herbes dicotylédone sont choisies dans le groupe constitué par *Trifolium, Melilotus* et *Medicago Lupulina,* et
dans laquelle lesdites monocotylédones sont des *Poa.*

2. Méthode selon la revendication 1, dans laquelle la composition (C) comprend en outre un composé (A2) de formule (Iₐ₂) et/ou un composé (A3) de formule (Iₐ₃) : 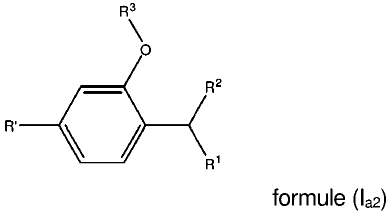 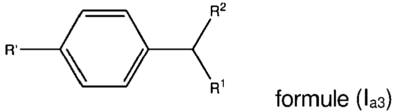 dans laquelle
- R³ est un hydrogène ;
- R' est un groupe méthyle ; et
- R¹ et R² sont des groupes méthyles.

3. Méthode selon la revendication 1 ou 2, dans laquelle la composition (C) comprend au moins un des ingrédients supplémentaires [ingrédient (I_{c}), ci-après], y compris, mais sans s'y limiter, y-terpinène, β-caryophyllène, α-thujène, α-pinène, camphène, sabinène, β-pinène, β-myrcène, α-terpinène, limonène, cis-ocimène, trans-ocimène, linalool, pinocamphone, bornéol, isopinocamphone, terpin-4-ol, α-terpinéol, β-bourbonène, germacrène-D, spathulénol et oxyde de caryophyllène.

4. Méthode selon l'une quelconque des revendications 1 à 3, dans laquelle la composition (C) est dérivée d'extraits végétaux choisis dans le groupe constitué d'extraits d'*Allium sp., Aloysia sp., Anethum sp., Anthriscus sp., Armorica sp., Artemisia sp., Borago sp., Capsicum sp., Carum sp., Chamaemelum sp., Chelidonium sp., Coriandrum sp., Cymbopogon sp., Foeniculum sp., Hyssopus sp., Lavandula sp., Laurus sp., Levisticum sp., Lippia sp., Melissa sp., Mentha sp., Monarda sp., Myrrhis sp, Ocimum sp., Origanum sp., Pelargonium sp., Pimpinella sp., Rosmarinus sp., Ruta sp., Salvia sp., Sanguisorba sp., Satureja sp., Thymus sp., Valeriana sp..*

5. Méthode selon l'une des revendications 1 à 4, dans laquelle la composition (C) comprise dans la formulation (F) est appliquée à une zone infestée par des mauvaises herbes dicotylédones à raison de 150 à 2700 mg par m² de ladite zone, de préférence de 300 à 2500 mg par m² de ladite zone, de préférence encore de 450 à 2350 mg par m² de ladite zone, et de préférence encore de 600 à 2250 mg par m² de ladite zone.

6. Méthode selon l'une des revendications 1 à 5, dans laquelle la formulation (F) est une formulation liquide [formulation liquide (F_{L}), ci-après], de préférence la formulation liquide (F_{L}) est une formulation à base d'eau comprenant de l'eau et au moins une composition (C).

7. Méthode selon la revendication 6, dans laquelle la formulation liquide (F_{L}) est appliquée par pulvérisation, atomisation, vaporisation, arrosage, giclée, aspersion, versement ou fumigation.

8. Méthode selon l'une des revendications 1 à 7, dans laquelle la formulation (F) comprend au moins un engrais [engrais (Z), ci-après], l'engrais (Z) étant un engrais organique [engrais organique (Zₒ), ci-après] ou un engrais organo-minéral [engrais (Z_{OM}), ci-après].

9. Méthode selon l'une quelconque des revendications 1 à 8, dans laquelle la formulation (F) peut comprendre en outre au moins un ingrédient supplémentaire [ingrédient (I_{F}), ci-après] choisi dans le groupe constitué d'agents suspensifs et d'agents destinés à améliorer la durée de conservation du produit, des colorants, des parfums, des solvants, des agents de dilution et des agents épaississants, des nutriments secondaires, des micronutriments, des agents d'étalement ou d'adhérence, des herbicides, des pesticides, des insecticides, des acaricides, des nématicides, des fongicides, des bactéricides, des rodenticides et des agents régulateurs de croissance.

10. Utilisation de la composition (C), telle que définie selon l'une des revendications 1 à 4, pour le traitement herbicide sélectif d'une zone infestée par des mauvaises herbes dicotylédones en présence de monocotylédones, dans laquelle lesdites mauvaises herbes dicotylédones sont choisies dans le groupe constitué par *Trifolium, Melilotus* et *Medicago Lupulina,* et
dans laquelle lesdites monocotylédones sont des *Poa.*
